# EUROPÄISCHE PATENTSCHRIFT

(11) **EP 3 078 214 B1**
(45) Veröffentlichungstag und Bekanntmachung des Hinweises auf die Patenterteilung: **26.06.2019**
(21) Anmeldenummer: 13811817.9
(22) Anmeldetag: 02.12.2013
(51) Int. Cl.: H04W 4/021, H04L 29/08, A47L 11/40

(54) **VERFAHREN ZUR ÜBERWACHUNG EINES EINSATZORTES EINER FLÄCHENBEARBEITUNGSVORRICHTUNG UND ÜBERWACHUNGSSYSTEM**
METHOD FOR MONITORING AN OPERATION LOCATION OF A SURFACE PROCESSING DEVICE, AND MONITORING SYSTEM
PROCÉDÉ POUR SURVEILLER UN EMPLACEMENT D'APPLICATION D'UN DISPOSITIF DE TRAITEMENT DE SURFACE ET SYSTÈME DE SURVEILLANCE

(43) Veröffentlichungstag der Anmeldung: 12.10.2016
(73) Patentinhaber: Alfred Kärcher SE & Co. KG, 71364 Winnenden (DE)
(72) Erfinder: GROHMANN, Alexander, 73660 Urbach (DE)
(74) Vertreter: Hoeger, Stellrecht & Partner Patentanwälte mbB
(86) Internationale Anmeldenummer: PCT/EP2013/075280
(87) Internationale Veröffentlichungsnummer: WO 2015/081979

(56) Entgegenhaltungen:
- EP-A2- 2 511 782
- US-A1- 2007 143 013

## Beschreibung

Die Erfindung betrifft ein Verfahren zur Überwachung eines Einsatzortes einer Flächenbearbeitungsvorrichtung, wobei eine Flächenbearbeitungsvorrichtung über eine Zuweisungseinheit einem räumlich begrenzten Einsatzgebiet zugewiesen wird und wobei die Position der Flächenbearbeitungsvorrichtung ermittelt und festgestellt wird, ob die Flächenbearbeitungsvorrichtung innerhalb oder außerhalb des Einsatzgebietes angeordnet ist, wobei die Flächenbearbeitungsvorrichtung einem ersten Einsatzgebiet zugewiesen wird und mindestens einem zweiten Einsatzgebiet, das vom ersten Einsatzgebiet räumlich getrennt ist, wobei festgestellt wird, ob die Flächenbearbeitungsvorrichtung außerhalb des ersten Einsatzgebietes angeordnet ist, aber innerhalb des mindestens einen zweiten Einsatzgebietes.

Außerdem betrifft die Erfindung ein Überwachungssystem zur Durchführung des Verfahrens.

Es ist bekannt, eine Arbeitsmaschine etwa in Gestalt einer Flächenbearbeitungsvorrichtung, einem Einsatzgebiet zuzuweisen. Das Einsatzgebiet, üblicherweise als "Geofence" bezeichnet, kann beispielsweise von einer Aufsichts- oder Bedienperson der Flächenbearbeitungsvorrichtung definiert werden mit dem Ziel, dass die Flächenbearbeitungsvorrichtung nur innerhalb des Einsatzgebietes eingesetzt werden kann oder darf. Beispielsweise wurde eine Vereinbarung über den Einsatz der Flächenbearbeitungsvorrichtung allein innerhalb des Einsatzgebietes getroffen. Ist die Flächenbearbeitungsvorrichtung außerhalb des Einsatzgebietes angeordnet, kann dies anhand eines Positionssensors festgestellt und eine diesbezügliche Mitteilung zum Beispiel an die Aufsichts- oder Bedienperson übermittelt werden.

Im vorliegenden Fall kann die Position der Flächenbearbeitungsvorrichtung beispielsweise über einen von dieser umfassten oder in diese integrierten Positionssensor bestimmt werden, beispielsweise einen GPS-Sensor. Es ist auch denkbar, die Position über eine Funkzelle eines Mobilfunknetzes, beispielsweise eines GSM-Netzes, zu ermitteln. Die Position lässt sich zum Beispiel auch über die Methode der Triangulation ermitteln, bei der sich in der Nähe der Flächenbearbeitungsvorrichtung befindende Mobilfunknetze (z. B. WLAN) erfasst und dadurch auf die Position der Flächenbearbeitungsvorrichtung geschlossen werden kann.

Das Einsatzgebiet der Flächenbearbeitungsvorrichtung ist im vorliegenden Fall auf vielfältige Weise definierbar. Beispielsweise ist dieses durch ein Gebäude vorgegeben oder durch ein geografisches Gebiet, welches durch ein geografisches Koordinatensystem definiert werden kann. Auch natürliche oder politische Grenzen erlauben es, das Einsatzgebiet zu definieren.

In der US 2013/0099977 A1 ist ein Verfahren zur Verwaltung eines Einsatzgebietes (Geofence) beschrieben. Das Verfahren schlägt vor, abhängig von der Bewegung eines dem Einsatzgebiet zugewiesenen mobilen Gerätes das Einsatzgebiet zu verändern, dieses beispielsweise zu vergrößern oder zu verkleinern.

Die US 2007/0143013 A1 beschreibt ein System und ein Verfahren zum Aktualisieren von Geofence-Informationen, die in einer Speichereinheit einer mobilen Vorrichtung hinterlegt sind. Die Position der mobilen Vorrichtung wird bestimmt und mit Positionsdaten der in der Speichereinheit gespeicherten Geofences verglichen. Befindet sich die mobile Vorrichtung in einem Geofence, der die Ersetzung der Geofences auslöst, wird die Menge der gespeicherten Geofences durch eine neue Menge von Geofences ersetzt.

In der EP 2 511 782 A2 ist eine autonome Reinigungsvorrichtung beschrieben, die zu von einem Benutzer gewünschten Zeiten, periodisch oder bei Vorliegen von Ereignissen eine Zustandsmeldung kabellos an ein externes Zusatzgerät des Benutzers überträgt.

Aufgabe der vorliegenden Erfindung ist es, ein gattungsgemäßes Verfahren bereitzustellen, das einen vielseitigeren Einsatz der Flächenbearbeitungsvorrichtung ermöglicht.

Diese Aufgabe wird erfindungsgemäß durch ein Verfahren mit den Merkmalen von Anspruch 1 gelöst.

Durch vorstehend genanntes Verfahren ist die Möglichkeit eines vielseitigeren Einsatzes der Flächenbearbeitungsvorrichtung gegeben. Die Flächenbearbeitungsvorrichtung kann im ersten Einsatzgebiet und darüber hinaus im mindestens einen zweiten Einsatzgebiet eingesetzt werden. Dies erlaubt es beispielsweise bei Fehlen einer oder Schaden an einer Flächenbearbeitungsvorrichtung im mindestens einen zweiten Einsatzgebiet, die Flächenbearbeitungsvorrichtung aus dem ersten Einsatzgebiet dorthin zu transportieren und einzusetzen. Das mindestens eine zweite Einsatzgebiet ist daher insbesondere ein Gebiet, in dem die Nutzung der Flächenbearbeitungsvorrichtung ebenso erlaubt ist wie im ersten Einsatzgebiet. Das Verfahren erlaubt eine vergleichsweise einfache Verwaltung von Einsatzgebieten, wenn die Flächenbearbeitungsvorrichtung wiederholt im ersten Einsatzgebiet und im mindestens einen zweiten Einsatzgebiet eingesetzt wird. Anders als bei dem in der US 2013/0099977 A1 beschriebenen Verfahren ist es insbesondere nicht erforderlich, Einsatzgebiete zeitabhängig zu verändern. Der Aufwand zur Verwaltung von Einsatzgebieten, insbesondere bei Vorhandensein einer Vielzahl von Flächenbearbeitungsvorrichtungen und gegebenenfalls mehreren Einsatzgebieten, lässt sich dadurch erheblich verringern. Auch die Anzahl möglicher Alarmmeldungen, dass die Flächenbearbeitungsvorrichtung das erste Einsatzgebiet verlassen hat, kann verringert werden, speziell wenn sich die Flächenbearbeitungsvorrichtung vor Versand einer solchen Alarmmeldung im mindestens einen zweiten Einsatzgebiet befindet.

Im vorliegenden Fall werden die Einsatzgebiete als räumlich voneinander getrennt angesehen, wenn sie einander nicht geografisch überlappen oder geografisch aneinander grenzen.

Günstig ist es, dass Positionsdaten der Flächenbearbeitungsvorrichtung an eine Berichtseinheit übermittelt werden und von der Berichtseinheit mindestens ein Bericht an mindestens eine Bedienperson übermittelt wird, wenn die Flächenbearbeitungsvorrichtung nicht im ersten Einsatzgebiet angeordnet ist. Wird die Flächenbearbeitungsvorrichtung aus dem ersten Einsatzgebiet entfernt, kann mindestens ein diesbezüglicher Bericht von der Berichtseinheit erstellt und an mindestens eine Bedienperson übermittelt werden.

Günstig ist es, dass der mindestens eine Bericht abhängig davon, wo die Flächenbearbeitungsvorrichtung außerhalb des ersten Einsatzgebietes angeordnet ist, sich zumindest hinsichtlich der mindestens einen Bedienperson unterscheidet, an die der mindestens eine Bericht gerichtet ist, insbesondere in Bezug auf mindestens ein Benutzerprofil der mindestens einen Bedienperson. Dadurch kann sichergestellt werden, dass je nach Aufenthaltsort der Flächenbearbeitungsvorrichtung außerhalb des ersten Einsatzgebietes mindestens eine Bedienperson oder mehrere unterschiedliche Bedienpersonen zielgerichtet informiert werden können. Die Bedienpersonen können sich insbesondere hinsichtlich ihres Benutzerprofils unterscheiden. Beispielsweise unterscheiden sich die Benutzerprofile der vorstehend erwähnten Einsatzgebiets- und Gesamtgebietsleiter voneinander.

Vorzugsweise wird die Flächenbearbeitungsvorrichtung ferner einem Überwachungsgebiet zugewiesen, das das erste Einsatzgebiet und das mindestens eine zweite Einsatzgebiet umfasst, und günstigerweise ist feststellbar, ob die Flächenbearbeitungsvorrichtung außerhalb des ersten Einsatzgebietes und des mindestens einen zweiten Einsatzgebietes, aber innerhalb des Überwachungsgebietes angeordnet ist oder ob die Flächenbearbeitungsvorrichtung außerhalb des Überwachungsgebietes angeordnet ist. Das Vorsehen eines Überwachungsgebietes erweist sich beispielsweise als vorteilhaft, wenn ein Nutzer oder Betreiber der Flächenbearbeitungsvorrichtung unterschiedliche Einsatzgebiete definiert, denen die jeweils unterschiedliche Flächenbearbeitungsvorrichtungen zugewiesen sind. So kann vorgesehen sein, dass jedem Einsatzgebiet ein Einsatzgebietsleiter zugeordnet ist und der Gesamtheit der Einsatzgebiete ein Gesamtgebietsleiter. Abhängig davon, wo sich die Flächenbearbeitungsvorrichtung befindet oder wohin diese bewegt wird, kann beispielsweise eine Mitteilung hierüber nur dem jeweiligen Einsatzgebietsleiter, auch dem Gesamtgebietsleiter, oder nur diesem übermittelt werden. Beispielsweise kann vorgesehen sein, dass der Gesamtgebietsleiter über den Aufenthaltsort der Flächenbearbeitungsvorrichtung nur dann informiert wird, wenn diese außerhalb des Überwachungsgebietes angeordnet ist, wohingegen bei Bewegungen innerhalb des Überwachungsgebietes keine Mitteilung an den Gesamtgebietsleiter ergeht. An den Einsatzgebietsleiter kann beispielsweise eine Mitteilung ergehen, wenn die Flächenbearbeitungsvorrichtung außerhalb des ihm zugeordneten (beispielsweise des ersten) Einsatzgebietes angeordnet ist.

Als vorteilhaft erweist es sich, wenn die Zuweisungseinheit eine Eingabeschnittstelle aufweist, die vorzugsweise ein Internetportal bereitstellt, umfasst oder als solches ausgebildet ist. Über die Eingabeschnittstelle kann die Flächenbearbeitungsvorrichtung benutzerfreundlich einem Einsatzgebiet oder einem Überwachungsgebiet zugewiesen werden.

Es kann auch vorgesehen sein, dass die Zuweisungseinheit eine Eingabeeinheit umfasst oder mit einer solchen gekoppelt ist.

Von Vorteil ist es, wenn über die Eingabeschnittstelle mit einem externen, handhaltbaren Gerät mit darauf hinterlegtem Zuweisungsanwendungsprogramm auf die Zuweisungseinheit zugegriffen werden kann zur Zuweisung eines Einsatz- oder Überwachungsgebietes an die Flächenbearbeitungsvorrichtung. Das handhaltbare Gerät, beispielsweise ein Tablet-Computer oder ein Smartphone mit Zuweisungsanwendungsprogramm, insbesondere in Form einer sogenannten "App", erlaubt eine benutzerfreundliche Zuweisung eines Einsatz- oder Überwachungsgebietes. Über die Eingabeschnittstelle kann das Gerät, vorzugsweise über das Internet, mit der Zuweisungseinheit verbunden sein. Auf der Zuweisungseinheit kann ein Computerprogramm ausführbar installiert sein, das mit dem Zuweisungsanwendungsprogramm zusammenwirken kann.

Der Bericht kann beispielsweise in elektronischer Form übermittelt werden, zum Beispiel als Textnachricht, als E-Mail oder als Faxnachricht. "Bericht" umfasst im vorliegenden Fall auch das Vorsehen eines entsprechenden Eintrages beispielsweise in einer Datenbank oder Speichereinheit der Berichtseinheit. Ein entsprechender Eintrag über den Bericht kann an einer Ausgabeschnittstelle der Berichtseinheit angezeigt oder über diese abgerufen werden.

Vorzugsweise wird als Berichtseinheit die Zuweisungseinheit verwendet, wodurch das Verfahren konstruktiv einfach umgesetzt werden kann.

Die Berichtseinheit umfasst günstigerweise eine Ausgabeschnittstelle, die vorzugsweise ein Internetportal bereitstellt, umfasst oder als solches ausgebildet ist. Über das Internetportal, beispielsweise eine von der Berichtseinheit erstellte und von einer Bedienperson abrufbare Internetseite, kann der Bedienperson der mindestens eine Bericht benutzerfreundlich übermittelt werden. "Übermitteln des Berichts " umfasst vorliegend demnach insbesondere auch das Darstellen einer Meldung über den Ort oder die Ortsänderung der Flächenbearbeitungsvorrichtung über das Internetportal.

Als vorteilhaft erweist es sich, wenn über die Ausgabeschnittstelle mit einem auf einem externen, handhaltbaren Gerät mit darauf hinterlegtem Berichtsanwendungsprogramm auf die Berichtseinheit zum Aufrufen und/oder Darstellen des mindestens einen Berichtes zugegriffen wird. Das externe Gerät, zum Beispiel das Smartphone oder der Tablet-Computer wie vorstehend erwähnt, erlaubt einen benutzerfreundlichen Zugriff auf die Berichtseinheit. Das Berichtsanwendungsprogramm ist insbesondere in Form einer sogenannten "App", die mit einem auf der Berichtseinheit installierten Computerprogramm zusammenwirken kann.

Als vorteilhaft erweist es sich, wenn ein erstes Benutzerprofil hinterlegt ist, an das der mindestens eine Bericht übermittelt wird, wenn die Flächenbearbeitungsvorrichtung außerhalb des ersten Einsatzgebietes angeordnet ist. Das erste Benutzerprofil ist der Berichtseinheit bekannt und zum Beispiel in einer Speichereinheit hinterlegt, die Bestandteil der Berichtseinheit oder mit dieser gekoppelt sein kann. Beispielsweise ist das erste Benutzerprofil mit einer Bedienperson verknüpft, bei der es sich um den Einsatzgebietsleiter des ersten Einsatzgebietes handelt. Ist die Flächenbearbeitungsvorrichtung außerhalb des ihm zugeordneten ersten Einsatzgebietes angeordnet, ergeht hierüber ein Bericht an den Einsatzgebietsleiter.

Von Vorteil ist es, wenn ein unterschiedlicher Bericht erstellt wird abhängig davon, ob die Flächenbearbeitungsvorrichtung im mindestens einen zweiten Einsatzgebiet angeordnet ist oder weder im ersten Einsatzgebiet noch im mindestens einen zweiten Einsatzgebiet. Die dem ersten Benutzerprofil zugeordnete Bedienperson kann dadurch anhand des Berichtes feststellen, ob die Flächenbearbeitungsvorrichtung sich im mindestens einen zweiten Einsatzgebiet und damit gewissermaßen in einem "erlaubten" Einsatzgebiet befindet. Ist dies nicht der Fall, ist die Flächenbearbeitungsvorrichtung weder im ersten noch im mindestens einen zweiten Einsatzgebiet und damit in einem "unerlaubten" Einsatzgebiet angeordnet, so dass die Bedienperson sich über die Änderung der Position der Flächenbearbeitungsvorrichtung informieren und erforderlichenfalls Maßnahmen ergreifen kann.

Weiter ist es von Vorteil, wenn ein unterschiedlicher Bericht erstellt wird abhängig davon, ob die Flächenbearbeitungsvorrichtung innerhalb oder außerhalb eines Überwachungsgebietes angeordnet ist, das das erste Einsatzgebiet und das mindestens eine zweite Einsatzgebiet umfasst. Die dem ersten Benutzerprofil zugeordnete Bedienperson kann anhand des Berichtes feststellen, ob die Flächenbearbeitungsvorrichtung sich gar außerhalb des Überwachungsgebietes befindet und dementsprechend in einem "noch weniger erlaubten" Gebiet.

Es kann vorgesehen sein, dass an das erste Benutzerprofil ein Bericht übermittelt wird, wenn eine weitere Flächenbearbeitungsvorrichtung, die einem dritten Einsatzgebiet zugewiesen ist, das sich räumlich vom ersten Einsatzgebiet und vom mindestens einen zweiten Einsatzgebiet unterscheidet, im ersten Einsatzgebiet angeordnet ist. Beispielsweise ist die weitere Flächenbearbeitungsvorrichtung in erster Linie dem dritten Einsatzgebiet zugewiesen und ergänzend dem ersten Einsatzgebiet. Wird die Flächenbearbeitungsvorrichtung in das erste Einsatzgebiet bewegt, zum Beispiel um darin einen Bearbeitungsauftrag auszuführen, kann dessen Position erfasst und von der Berichtseinheit ein diesbezüglicher Bericht erstellt werden. Einer dem ersten Benutzerprofil zugeordnete Bedienperson wird gemeldet, dass sich eine an sich "fremde" Flächenbearbeitungsvorrichtung in seinem ersten Einsatzgebiet befindet. Dies ist zum Beispiel von Vorteil, wenn der entsprechende Einsatzgebietsleiter des ersten Einsatzgebietes zur Unterstützung eines Bearbeitungsauftrages eine weitere Flächenbearbeitungsvorrichtung aus einem weiteren, hier dem dritten Einsatzgebiet, angefordert hat.

Günstig ist es, wenn ein zweites Benutzerprofil hinterlegt ist, an das der mindestens eine Bericht übermittelt wird, wenn die Flächenbearbeitungsvorrichtung außerhalb eines Überwachungsgebietes angeordnet ist, das das erste Einsatzgebiet und das mindestens eine zweite Einsatzgebiet umfasst. Dem zweiten Benutzerprofil ist zum Beispiel eine Bedienperson zugeordnet, die die Aufsicht über mehrere Einsatzgebiete und das Überwachungsgebiet hat. Dabei handelt es sich zum Beispiel über den vorstehend erwähnten Gesamtgebietsleiter. Für die dem zweiten Benutzerprofil zugeordnete Bedienperson kann es von untergeordneter Bedeutung sein, innerhalb welchen Einsatzgebietes sich die Flächenbearbeitungsvorrichtung oder weitere von ihr verwaltete Flächenbearbeitungsvorrichtungen befindet bzw. befinden, sofern sie innerhalb des Überwachungsgebietes angeordnet sind. Befindet sich jedoch eine Flächenverarbeitungsvorrichtung außerhalb des Überwachungsgebietes, wird die dem zweiten Benutzerprofil zugeordnete Bedienperson hierüber informiert.

Es kann vorgesehen sein, dass an das zweite Benutzerprofil kein Bericht übermittelt wird, wenn die Flächenbearbeitungsvorrichtung innerhalb des Überwachungsgebietes angeordnet ist. Die dem zweiten Benutzerprofil zugeordnete Bedienperson wird erst informiert, wenn eine Flächenbearbeitungsvorrichtung das Überwachungsgebiet verlässt. Ergeht keine diesbezügliche Mitteilung, kann die Bedienperson davon ausgehen, dass weiterhin alle Flächenbearbeitungsvorrichtungen innerhalb des Überwachungsgebietes angeordnet sind.

Es kann vorgesehen sein, dass die Zuweisung der Flächenbearbeitungsvorrichtung zu einem Einsatzgebiet (beispielsweise dem ersten oder dem mindestens einen zweiten Einsatzgebiet) oder zu einem Überwachungsgebiet über das zweite Benutzerprofil vorgenommen wird. Beispielsweise berechtigt nur eine mit dem zweiten Benutzerprofil verknüpfte Berechtigungsstufe dazu, eine Flächenbearbeitungsvorrichtung einem bestimmten Gebiet zuzuweisen.

Als vorteilhaft erweist es sich, wenn das Verfahren mit einer Flächenbearbeitungsvorrichtung in Gestalt einer Flächenreinigungsvorrichtung verwendet wird. Das Verfahren kann beispielsweise von einem Betreiber oder Nutzer von Flächenreinigungsvorrichtungen eingesetzt werden, welcher unterschiedliche Niederlassungen hat, in denen jeweils unterschiedliche Einsatzgebiete definiert sind. Bei dem von der Niederlassung verwalteten Gebiet kann es sich zum Beispiel über das Überwachungsgebiet handeln, das in eine Mehrzahl von Einsatzgebieten aufgeteilt ist.

Die Flächenbearbeitungsvorrichtung kann handgeführt sein (walk-behind) oder eine Aufsitzvorrichtung (ride-on).

Die Flächenreinigungsvorrichtung kann eine Bodenreinigungsvorrichtung sein, beispielsweise eine Kehrmaschine, eine Saugmaschine, eine Kehrsaugmaschine oder eine Schrubbmaschine.

Die Flächenreinigungsvorrichtung kann auch ein Strahlgerät sein, zum Beispiel ein Fluidstrahlgerät wie ein Hochdruckreinigungsgerät, oder ein Partikelstrahlgerät wie etwa ein Trockeneisstrahlgerät oder ein Sandstrahlgerät.

Das Verfahren erweist sich insbesondere auch als vorteilhaft, wenn als Flächenbearbeitungsvorrichtung eine selbstfahrende und selbstlenkende Flächenbearbeitungsvorrichtung verwendet wird, mit der eine Fläche autonom bearbeitet werden kann. Dabei kann es vorkommen, dass die selbstfahrende Flächenbearbeitungsvorrichtung, während sie sich bewegt, ein ihm zugewiesenes Einsatzgebiet oder das Überwachungsgebiet verlässt. Mindestens ein diesbezüglicher Bericht kann von der Berichtseinheit erstellt werden, wenn die Position der Flächenbearbeitungsvorrichtung ermittelt wird.

Wie eingangs erwähnt, betrifft die Erfindung auch ein Überwachungssystem zur Durchführung des Verfahrens.

Aufgabe der vorliegenden Erfindung ist es, ein Überwachungssystem zur Durchführung eines der vorstehend genannten Verfahren durchzuführen.

Diese Aufgabe wird erfindungsgemäß durch ein Überwachungssystem mit den Merkmalen von Anspruch 10 gelöst.

Die bereits im Zusammenhang mit der Erläuterung des erfindungsgemäßen Verfahrens erwähnten Vorteile können unter Einsatz des Überwachungssystems ebenfalls erzielt werden. Diesbezüglich kann auf voranstehende Erläuterungen verwiesen werden.

In entsprechender Weise kann in Bezug auf Vorteile nachfolgend genannter vorteilhafter Ausführungsformen des Überwachungssystems auf vorstehende Erläuterungen in Bezug auf vorteilhafte Ausführungsbeispiele des erfindungsgemäßen Verfahrens verwiesen werden.

Vorteilhafterweise umfasst die Flächenbearbeitungsvorrichtung den Positionssensor, beispielsweise einen GPS-Sensor. Als Positionssensor wird im vorliegenden Fall auch eine eingangs erläuterte Einrichtung verstanden, mit der die Position der Flächenbearbeitungsvorrichtung anhand von Funkzellen beispielsweise eines GSM-Netzes festgestellt werden kann oder eine Einrichtung, mit der mittels Triangulation anhand von Informationen von Funknetzen die Position ermittelt werden kann.

Von Vorteil ist es, wenn die Flächenbearbeitungsvorrichtung ferner einem Überwachungsgebiet zuweisbar ist, das das erste Einsatzgebiet und das mindestens eine zweite Einsatzgebiet umfasst und wenn feststellbar ist, ob die Flächenbearbeitungsvorrichtung außerhalb des ersten Einsatzgebietes und des mindestens einen zweiten Einsatzgebietes, aber innerhalb des Überwachungsgebietes angeordnet ist oder ob die Flächenbearbeitungsvorrichtung außerhalb des Überwachungsgebietes angeordnet ist.

Günstigerweise weist die Zuweisungseinheit eine Eingabeschnittstelle auf, die vorzugsweise ein Internetportal bereitstellt, umfasst oder als solches ausgebildet ist.

Von Vorteil ist es, wenn die Eingabeschnittstelle so ausgebildet ist, dass auf sie mit einem externen, handhaltbaren Gerät mit darauf hinterlegtem Zuweisungsanwendungsprogramm auf die Zuweisungseinheit zugreifbar ist zur Zuweisung eines Einsatz- oder Überwachungsgebietes an die Flächenbearbeitungsvorrichtung.

Das Überwachungssystem umfasst eine Berichtseinheit, an die Positionsdaten übermittelt werden und von der mindestens ein Bericht an mindestens eine Bedienperson übermittelbar ist, wenn die Flächenbearbeitungsvorrichtung nicht im ersten Einsatzgebiet angeordnet ist.

Günstigerweise umfasst die Zuweisungseinheit die Berichtseinheit oder bildet diese aus oder umgekehrt.

Vorteilhafterweise weist die Berichtseinheit eine Ausgabeschnittstelle auf, die vorzugsweise ein Internetportal bereitstellt, umfasst oder als solches ausgebildet ist.

Günstig ist es, wenn die Ausgabeschnittstelle so ausgebildet ist, dass mit einem externen, handhaltbaren Gerät mit darauf hinterlegtem Berichtsanwendungsprogramm auf die Berichtseinheit zum Aufrufen und/oder Darstellen des mindestens einen Berichtes zugegriffen werden kann.

Günstig ist es, dass der mindestens eine Bericht abhängig davon, wo die Flächenbearbeitungsvorrichtung außerhalb des ersten Einsatzgebietes angeordnet ist, sich zumindest hinsichtlich der mindestens einen Bedienperson unterscheidet, an die der mindestens eine Bericht gerichtet ist, insbesondere in Bezug auf mindestens ein in einer Speichereinheit des Überwachungssystems hinterlegtes Benutzerprofil der mindestens einen Bedienperson.

Vorzugswiese ist in der Speichereinheit ein erstes Benutzerprofil hinterlegt, an das der mindestens eine Bericht übermittelt wird, wenn die Flächenbearbeitungsvorrichtung außerhalb des ersten Einsatzgebietes angeordnet ist.

Günstigerweise wird ein unterschiedlicher Bericht erstellt abhängig davon, ob die Flächenbearbeitungsvorrichtung im mindestens einen zweiten Einsatzgebiet angeordnet ist oder weder im ersten Einsatzgebiet noch im mindestens einen zweiten Einsatzgebiet.

Von Vorteil ist es, wenn ein unterschiedlicher Bericht erstellt wird abhängig davon, ob die Flächenbearbeitungsvorrichtung innerhalb oder außerhalb eines Überwachungsgebietes angeordnet ist, das das erste Einsatzgebiet und das mindestens eine zweite Einsatzgebiet umfasst.

Günstig ist es, wenn an das erste Benutzerprofil ein Bericht übermittelt wird, wenn eine weitere Flächenbearbeitungsvorrichtung, die einem dritten Einsatzgebiet zugewiesen ist, das sich räumlich vom ersten Einsatzgebiet und vom mindestens einen zweiten Einsatzgebiet unterscheidet, im ersten Einsatzgebiet angeordnet ist.

Vorzugsweise ist in der Speichereinheit ein zweites Benutzerprofil hinterlegt ist, an das der mindestens eine Bericht übermittelt wird, wenn die Flächenbearbeitungsvorrichtung außerhalb eines Überwachungsgebietes angeordnet ist, das das erste Einsatzgebiet und das mindestens eine zweite Einsatzgebiet umfasst.

Günstigerweise wird an das zweite Benutzerprofil kein Bericht übermittelt, wenn die Flächenbearbeitungsvorrichtung innerhalb des Überwachungsgebietes angeordnet ist.

Bevorzugt kann die Zuweisung der Flächenbearbeitungsvorrichtung zu einem Einsatzgebiet oder einem Überwachungsgebiet über das zweite Benutzerprofil vorgenommen werden.

Die Flächenbearbeitungsvorrichtung kann eine Flächenreinigungsvorrichtung sein, insbesondere eine Bodenreinigungsvorrichtung. Beispiele für Flächenreinigungsvorrichtungen wurden bereits vorstehend erwähnt.

Die Flächenbearbeitungsvorrichtung kann eine selbstfahrende und selbstlenkende Flächenbearbeitungsvorrichtung sein.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung eines erfindungsgemäßen Überwachungssystems, mit dem ein erfindungsgemäßes Verfahren durchführbar ist und
- Figur 2:: ein Überwachungsgebiet umfassend drei Einsatzgebiete für Flächenbearbeitungsvorrichtungen in schematischer Darstellung.

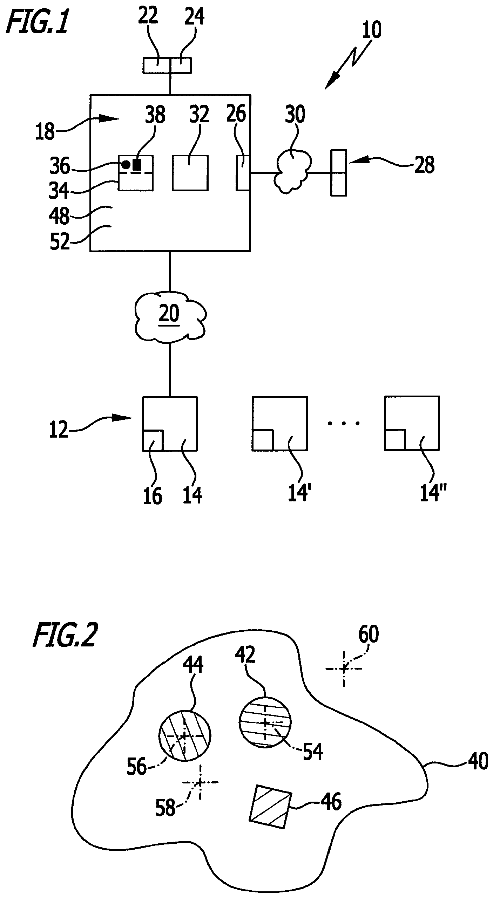

Figur 1 zeigt schematisch ein mit dem Bezugszeichen 10 belegtes Überwachungssystem, das eine Flächenbearbeitungsvorrichtung 12 umfasst zur Bearbeitung einer in der Zeichnung nicht dargestellten Fläche. Die Flächenbearbeitungsvorrichtung 12 ist vorliegend ausgestaltet als Bodenreinigungsgerät 14, zum Beispiel als Kehrmaschine, Saugmaschine, Kehrsaugmaschine oder Schrubbmaschine.

Das Überwachungssystem 10 weist vorzugsweise weitere Flächenbearbeitungsvorrichtungen auf, von denen beispielhaft zwei weitere Bodenreinigungsgeräte 14' und 14" gezeigt sind.

Das Bodenreinigungsgerät 14 umfasst einen Positionssensor 16, mit dem die Position des Bodenreinigungsgerätes 14 ermittelbar ist. Beispielsweise ist der Positionssensor 16 ein GPS-Sensor. Denkbar ist auch, dass anhand der Kennungen von Funkzellen eines Mobilfunknetzes festgestellt wird, wo sich das Bodenreinigungsgerät 14 befindet. Als Positionssensor wird auch eine Einrichtung des Bodenreinigungsgerätes 14 angesehen, die, zum Beispiel über ein Mobilfunknetz, eine Kennung übermittelt, die, zum Beispiel von der nachfolgend erwähnten Datenverarbeitungseinrichtung, zur Bestimmung des Standortes des Bodenreinigungsgerätes 14 ausgewertet wird.

Das Überwachungssystem 10 umfasst eine Datenverarbeitungseinrichtung 18, beispielsweise einen Computer oder Server im Besitz oder unter Verwaltung eines Betreibers oder Nutzers des Überwachungssystems 10. Die Datenverarbeitungseinrichtung 18 ist über ein Kommunikationsnetz 20 mit dem Bodenreinigungsgerät 10 gekoppelt oder koppelbar. Das Kommunikationsnetz 20 ist beispielsweise ein Telekommunikationsnetz oder das Internet.

Ferner umfasst das Überwachungssystem 10 eine Eingabeeinheit 22 und eine Ausgabeeinheit 24, die mit der Datenverarbeitungseinrichtung 18 gekoppelt sind. Die Datenverarbeitungseinrichtung 18 umfasst ferner eine Eingabe- und/oder Ausgabeschnittstelle 26. Über die Schnittstelle 26 kann ein externes und bevorzugt handhaltbares Gerät 28 mit der Datenverarbeitungseinrichtung 18 gekoppelt werden. Das Gerät 28 ist beispielsweise ein Smartphone oder ein Tablet-Computer, und es kann zum Beispiel über ein Kommunikationsnetz 30, etwa das Internet, mit der Schnittstelle 26 koppeln.

Auf dem Gerät 28 kann ein Anwendungsprogramm in Form einer so genannten "App" ausführbar gespeichert sein, über die auf die Schnittstelle 26 zugegriffen werden kann. Beispielsweise stellt die Schnittstelle 26 ein Internetportal bereit oder bildet ein solches aus. Alternativ oder ergänzend kann die Bedienperson auf eine in der Datenverarbeitungseinrichtung 18 ausführbar gespeicherte Software zugreifen. Zum Ausführen der Software umfasst die Datenverarbeitungseinrichtung 18 ein Rechenglied 32, zum Beispiel einen Mikroprozessor.

Das Gerät 28 kann auch ein herkömmlicher Computer sein, über den die vorstehend erwähnte Internetplattform aufgerufen werden kann, ohne dass hierfür ein Anwendungsprogramm auf dem Gerät 28 gespeichert sein muss.

Die Datenverarbeitungseinrichtung 18 umfasst ferner eine Speichereinheit 34. In der Speichereinheit 34 ist eine Information über Einsatzgebiete und Überwachungsgebiete für das Bodenreinigungsgerät 14 sowie weitere vom Überwachungssystem 10 umfasste Flächenbearbeitungsvorrichtungen 12 enthalten. Auf diese Gebiete wird nachfolgend noch eingegangen.

Ferner sind in der Speichereinheit 34 Benutzerprofile hinterlegt für Bedienpersonen des Überwachungssystems 10. Beispielhaft ist ein erstes Benutzerprofil 36 und ein zweites Benutzerprofil 38 dargestellt. Die Benutzerprofile 36, 38 sind unterschiedlichen Bedienpersonen zugeordnet und unterscheiden sich beispielsweise hinsichtlich der Berechtigungsstufe zur Nutzung des Überwachungssystems 10. Insbesondere unterscheiden sich die Benutzerprofile 36, 38 auch darin, wie die jeweilige Bedienperson bei einer Veränderung des Standortes des Bodenreinigungsgerätes 14 informiert wird.

Die dem Benutzerprofil 38 zugeordnete Bedienperson ist beispielsweise ein Gesamtgebietsleiter eines Betreibers oder Nutzers des Überwachungssystems 10, der die Aufsicht über alle einem Überwachungsgebiet 40 zugeordneten Flächenbearbeitungsvorrichtungen 12 hat. Das Überwachungsgebiet 40 kann beispielsweise durch politische Grenzen definiert sein oder durch Grenzen, die anhand eines geographischen Koordinatensystem definiert sind. Entsprechendes gilt für Gebiete innerhalb des Überwachungsgebietes 40.

Innerhalb des Überwachungsgebietes 40 können mehrere Einsatzgebiete für Flächenbearbeitungsvorrichtungen 12 definiert sein, beispielsweise ein erstes Einsatzgebiet 42, ein zweites Einsatzgebiet 44 und ein drittes Einsatzgebiet 46.

Bei der dem Benutzerprofil 36 zugeordneten Bedienperson handelt es sich zum Beispiel um einen Einsatzgebietsleiter, der die Aufsicht über alle seinem Einsatzgebiet zugewiesenen Flächenbearbeitungsvorrichtungen 12 hat. Beispielsweise hat der Einsatzgebietsleiter die Aufsicht über das erste Einsatzgebiet 42.

Flächenbearbeitungsvorrichtungen 12 des Überwachungssystems 10 können im vorliegenden Fall einem oder mehreren Einsatzgebieten 42, 44, 46, die insbesondere räumlich getrennt voneinander sind, und dem Überwachungsgebiet 40 zugewiesen werden. Eine Zuweisung erfolgt unter Nutzung der Datenverarbeitungseinrichtung 18, beispielsweise durch die dem Benutzerprofil 38 zugeordnete Bedienperson, insbesondere einem Gesamtgebietsleiter. Eine Zuweisung kann jedoch auch von einer andersartigen Bedienperson vorgenommen werden, die hierzu ein entsprechendes Benutzerprofil aufweisen kann, welches mit den entsprechenden Berechtigungen in der Speichereinheit 34 gespeichert sein kann.

Aufgrund der Möglichkeit der Zuweisung von Flächenbearbeitungsvorrichtungen 12 zu Gebieten wird die Datenverarbeitungseinrichtung 18 auch als Zuweisungseinheit 48 bezeichnet. Eine Zuweisung erfolgt zum Beispiel unter der Nutzung des externen Gerätes 28 oder der Eingabeeinheit 22.

Nachfolgend wird angenommen, dass das Bodenreinigungsgerät 14 dem ersten Einsatzgebiet 42 zugewiesen ist. Das erste Einsatzgebiet 42 entspricht dem Haupteinsatzgebiet des Bodenreinigungsgerätes 14, in dem dieses üblicherweise Reinigungsaufträge ausführt. Die Besonderheit des Überwachungssystems 10 und des mit diesem ausführbaren Verfahrens besteht vorliegend darin, dass jede Flächenbearbeitungsvorrichtung 12 mehr als nur einem Einsatzgebiet zugewiesen sein kann. Im vorliegenden Fall ist das Bodenreinigungsgerät 14 auch dem zweiten Einsatzgebiet 44 zugewiesen, das räumlich getrennt ist vom ersten Einsatzgebiet 42. Außerdem ist das Bodenreinigungsgerät 14 dem Überwachungsgebiet 40 zugewiesen, welches die Einsatzgebiete 42, 44, 46 umfasst.

Die Position des Bodenreinigungsgerätes 14 wird, beispielsweise in regelmäßigen Abständen, unter der Nutzung des Positionssensors 16 ermittelt, und diesbezügliche Positionsdaten werden an die Datenverarbeitungseinrichtung 18 übertragen. Abhängig von der Position des Bodenreinigungsgerätes 14 erstellt die Datenverarbeitungseinrichtung 18 einen Bericht über die Position und/oder Positionsänderungen des Bodenreinigungsgerätes 14. Aus diesem Grund wird die Datenverarbeitungseinrichtung 18 auch als Berichtseinheit 52 bezeichnet. Abhängig von der Position und/oder der Positionsänderung unterscheidet sich der erstellte und übermittelte Bericht der Berichtseinheit 52 zumindest hinsichtlich der Bedienperson, an die der Bericht gerichtet ist. Beispielsweise wird der Bericht abhängig von der Position und/oder der Positionsänderung an nur eine oder beide Bedienpersonen, die den Benutzerprofilen 36, 38 zugeordnet sind, übermittelt.

Die Übermittlung des Berichts erfolgt vorliegend vorzugsweise über das von der Datenverarbeitungseinrichtung 18 bereitgestellte Internetportal. Der Bericht kann am externen Gerät 28 oder an der Ausgabeeinheit 24 angezeigt werden kann. Der Bericht kann ferner in der Speichereinheit 34 gespeichert sein. Der Bericht kann auch eine Nachricht in Textform oder als E-Mail an eine Bedienperson des Überwachungssystems 10 umfassen.

Ist das Bodenreinigungsgerät 14 im ersten Einsatzgebiet 42 (dem Haupteinsatzgebiet) angeordnet, beispielsweise an der Position 54, ist es innerhalb des ihm "erlaubten" Einsatzgebietes 42 angeordnet. Es kann vorgesehen sein, dass von der Datenverarbeitungseinrichtung 18 kein diesbezüglicher gesonderter Bericht erstellt wird.

Es kann vorgesehen sein, dass das Bodenreinigungsgerät 14 zur Ausführung eines Reinigungsauftrages in das Einsatzgebiet 44 transportiert wird, dem es ebenfalls zugewiesen ist und das dementsprechend ebenfalls ein erlaubtes Einsatzgebiet für das Bodenreinigungsgerät 14 ist. Ist das Bodenreinigungsgerät 14 im Einsatzgebiet 44 angeordnet, zum Beispiel an der Position 56, kann dies über die Positionsdaten des Positionssensors 16 ermittelt und der Datenverarbeitungseinrichtung 18 ein diesbezügliches Signal bereitgestellt werden. Die Datenverarbeitungseinrichtung 18 erstellt einen Bericht. Der Bericht ist im vorliegenden Fall nur an die dem ersten Benutzerprofil 36 zugeordnete Bedienperson gerichtet, den Einsatzgebietsleiter für das Einsatzgebiet 42. Dieser wird darüber informiert, dass das Bodenreinigungsgerät 14 sich zwar außerhalb seines Haupteinsatzgebietes 42, aber noch innerhalb eines weiteren erlaubten Einsatzgebietes 44 befindet.

Demgegenüber ergeht im vorliegenden Fall kein diesbezüglicher Bericht an die dem Benutzerprofil 38 zugeordnete Bedienperson, dem Gesamtgebietsleiter für das Überwachungsgebiet 40.

Ist das Bodenreinigungsgerät 14 außerhalb der Einsatzgebiete 42, 44, denen es zugewiesen ist, aber innerhalb des Überwachungsgebietes 40 an einer beispielhaften Position 58 angeordnet, erstellt die Datenverarbeitungseinrichtung 18 einen diesbezüglichen Bericht. Der Bericht wird in diesem Fall ebenfalls nur an dem Benutzerprofil 36 zugeordneten Einsatzgebietsleiter übermittelt, nicht jedoch an den dem Benutzerprofil 38 zugeordneten Gesamtgebietsleiter. Insbesondere umfasst der Bericht in diesem Fall einen Alarmhinweis für den Einsatzgebietsleiter, dass sich das Bodenreinigungsgerät 14 außerhalb der erlaubten Einsatzgebiete 42, 44 befindet. Erforderlichenfalls kann der Einsatzgebietsleiter Maßnahmen ergreifen um festzustellen, aufgrund welcher Ursache sich das Bodenreinigungsgerät 14 außerhalb erlaubter Einsatzgebiete 42, 44 befindet.

Ist das Bodenreinigungsgerät 14 außerhalb des Überwachungsgebietes 40 angeordnet, zum Beispiel an der Position 60, erstellt die Datenverarbeitungseinrichtung 18 einen diesbezüglichen Bericht. Der Bericht kann in diesem Fall an den dem Benutzerprofil 36 zugeordneten Einsatzgebietsleiter gerichtet sein und insbesondere einen Alarmhinweis umfassen, dass sich das Bodenreinigungsgerät 14 nicht nur außerhalb erlaubter Einsatzgebiete 42, 44 befindet, sondern sogar außerhalb des Überwachungsgebietes 40.

Der Bericht wird in diesem Fall auch an den dem Benutzerprofil 38 zugeordneten Gesamtgebietsleiter übermittelt, damit dieser über denselben Sachverhalt informiert wird. Insbesondere wird der Gesamtgebietsleiter bevorzugt nur dann über Positionen und/oder Positionsänderungen des Bodenreinigungsgerätes 14 informiert, wenn sich dieses außerhalb des von ihm überwachten Überwachungsgebietes 40 befindet, jedoch nicht bei Bewegungen innerhalb des Überwachungsgebietes 40.

Das Überwachungssystem 10 erlaubt es insbesondere einzustellen, an welches Benutzerprofil im Falle einer Positionsänderung des Bodenreinigungsgerätes 14 ein Bericht übermittelt wird, dies kann auch von dem vorstehend erläuterten Beispiel abweichen. Jedoch können sich die Berichte speziell abhängig von der Position und/oder Positionsänderung des Bodenreinigungsgerätes 14 zumindest hinsichtlich des Benutzerprofils, dass sie gerichtet sind, unterscheiden.

Je nach Benutzerprofil und dementsprechend der Funktion, der einem jeweiligen Benutzerprofil zugeordneten Bedienperson unterschiedliche Berichte zu übermitteln ist es dadurch möglich, dass die jeweilige Bedienperson eine unterschiedliche Sicht auf Positionen und/oder Positionsänderungen der Flächenbearbeitungsvorrichtungen 12 hat. Während Positionsänderungen im Falle eines Einsatzgebietsleiters von Bedeutung sein mögen, weil sich das Bodenreinigungsgerät 14 außerhalb erlaubter Einsatzgebiete 42, 44 befindet, ist dies für einen Gesamtgebietsleiter möglicherweise nicht von Interesse, solange sich das Bodenreinigungsgerät 14 innerhalb des Überwachungsgebietes 40 befindet.

Durch die Möglichkeit, ein Bodenreinigungsgerät 14 mehr als nur einem Einsatzgebiet 42, 44 zuzuweisen, kann beispielsweise die Anzahl an sich überflüssiger Alarmmeldungen verringert werden, wenn das Bodenreinigungsgerät 14 außerhalb des Einsatzgebietes 42 bewegt wird, aber innerhalb des Einsatzgebietes 44, selbst wenn es zwischenzeitlich durch ein "nicht erlaubtes" Gebiet innerhalb oder sogar außerhalb des Überwachungsgebietes 40 bewegt wird.

Nachfolgend wird angenommen, dass ein weiteres Bodenreinigungsgerät, beispielsweise das Bodenreinigungsgerät 14' dem Einsatzgebiet 46 als Haupteinsatzgebiet zugewiesen ist und zusätzlich dem Einsatzgebiet 42 als weiterem Einsatzgebiet. Ist das Bodenreinigungsgerät 14' im Einsatzgebiet 42 angeordnet, kann vorgesehen sein, dass von der Datenverarbeitungseinrichtung 18 ein diesbezüglicher Bericht an den dem Benutzerprofil 36 zugeordneten Einsatzgebietsleiter übermittelt wird. Dieser kann darüber informiert werden, dass das Bodenreinigungsgerät 14' sich als "fremdes" Bodenreinigungsgerät innerhalb des ihm zugewiesenen erlaubten Einsatzgebietes 42 befindet.

Es kann vorgesehen sein, dass beispielsweise die Einsatzgebiete 42, 44, 46 in sich in räumlich voneinander getrennte Einsatzbereiche eingeteilt sind. Bei einem Einsatzbereich handelt es sich zum Beispiel um ein Gebäude innerhalb eines Einsatzgebietes. Dementsprechend ist es möglich, dass auch bei Positionsänderungen innerhalb des Einsatzgebietes 42 Berichte an unterschiedliche Benutzerprofile positionsabhängig von der Datenverarbeitungseinrichtung 18 erstellt und übermittelt werden. Beispielsweise kann in der Speichereinheit 34 ein weiteres Benutzerprofil hinterlegt sein, dessen zugeordnete Bedienperson (ein Bereichsleiter) Aufsicht über eine Flächenbearbeitungsvorrichtung nur eines Einsatzbereiches innerhalb des Einsatzgebietes hat. Verlässt die Flächenbearbeitungsvorrichtung 12 den Einsatzbereich (beispielsweise das Gebäude), wird der Bereichsleiter darüber informiert, nicht jedoch der Einsatzgebietsleiter, der dem Benutzerprofil 36 zugeordnet ist, solange die Flächenbearbeitungsvorrichtung nicht außerhalb des oder der ihm zugewiesenen Einsatzgebietes angeordnet ist.

## Patentansprüche

1. Verfahren zur Überwachung eines Einsatzortes einer Flächenbearbeitungsvorrichtung, wobei eine Flächenbearbeitungsvorrichtung (12) über eine Zuweisungseinheit (48) einem räumlich begrenzten Einsatzgebiet (42, 44, 46) zugewiesen wird und wobei die Position der Flächenbearbeitungsvorrichtung (12) ermittelt und festgestellt wird, ob die Flächenbearbeitungsvorrichtung (12) innerhalb oder außerhalb des Einsatzgebietes (42, 44, 46) angeordnet ist, wobei die Flächenbearbeitungsvorrichtung (12) einem ersten Einsatzgebiet (42) zugewiesen wird und mindestens einem zweiten Einsatzgebiet (44), das vom ersten Einsatzgebiet (42) räumlich getrennt ist, wobei festgestellt wird, ob die Flächenbearbeitungsvorrichtung (12) außerhalb des ersten Einsatzgebietes (42), aber innerhalb des mindestens einen zweiten Einsatzgebietes (44) angeordnet ist, **dadurch gekennzeichnet, dass** Positionsdaten der Flächenbearbeitungsvorrichtung (12) an eine Berichtseinheit (52) übermittelt werden und von der Berichtseinheit (52) mindestens ein Bericht an mindestens eine Bedienperson übermittelt wird, wenn die Flächenbearbeitungsvorrichtung (12) nicht im ersten Einsatzgebiet (42) angeordnet ist, und dass der mindestens eine Bericht abhängig davon, wo die Flächenbearbeitungsvorrichtung (12) außerhalb des ersten Einsatzgebietes (42) angeordnet ist, sich zumindest hinsichtlich der mindestens einen Bedienperson unterscheidet, an die der mindestens eine Bericht gerichtet ist, insbesondere in Bezug auf mindestens ein Benutzerprofil (36, 38) der mindestens einen Bedienperson.

2. Verfahren nach Anspruch 1, **dadurch gekennzeichnet, dass** die Flächenbearbeitungsvorrichtung (12) ferner einem Überwachungsgebiet (40) zugewiesen wird, das das erste Einsatzgebiet (42) und das mindestens eine zweite Einsatzgebiet (44) umfasst und dass feststellbar ist, ob die Flächenbearbeitungsvorrichtung (12) außerhalb des ersten Einsatzgebietes (42) und des mindestens einen zweiten Einsatzgebietes (44), aber innerhalb des Überwachungsgebietes (40) angeordnet ist oder ob die Flächenbearbeitungsvorrichtung (12) außerhalb des Überwachungsgebietes (40) angeordnet ist.

3. Verfahren nach Anspruch 1 oder 2, **dadurch gekennzeichnet, dass** die Zuweisungseinheit eine Eingabeschnittstelle (26) aufweist, die vorzugsweise ein Internetportal bereitstellt, umfasst oder als solches ausgebildet ist, wobei über die Eingabeschnittstelle (26) vorzugsweise mit einem externen, handhaltbaren Gerät (28) mit darauf hinterlegtem Zuweisungsanwendungsprogramm auf die Zuweisungseinheit (48) zugegriffen werden kann zur Zuweisung eines Einsatz- oder Überwachungsgebietes (40, 42, 44, 46) an die Flächenbearbeitungsvorrichtung (12).

4. Verfahren nach einem der voranstehenden Ansprüche, **dadurch gekennzeichnet, dass** die Berichtseinheit (52) eine Ausgabeschnittstelle (26) aufweist, welche vorzugsweise ein Internetportal bereitstellt, umfasst oder als solches ausgebildet ist und/oder über welche vorzugsweise mit einem auf einem externen, handhaltbaren Gerät (28) mit darauf hinterlegtem Berichtsanwendungsprogramm auf die Berichtseinheit zum Aufrufen und/oder Darstellen des mindestens einen Berichtes zugegriffen wird.

5. Verfahren nach einem der voranstehenden Ansprüche, **dadurch gekennzeichnet, dass** ein erstes Benutzerprofil (36) hinterlegt ist, an das der mindestens eine Bericht übermittelt wird, wenn die Flächenbearbeitungsvorrichtung (12) außerhalb des ersten Einsatzgebietes (42) angeordnet ist.

6. Verfahren nach Anspruch 5, **dadurch gekennzeichnet, dass** zumindest eines der Folgenden durchgeführt wird:
- es wird ein unterschiedlicher Bericht erstellt abhängig davon, ob die Flächenbearbeitungsvorrichtung (12) im mindestens einen zweiten Einsatzgebiet (44) angeordnet ist oder weder im ersten Einsatzgebiet (42) noch im mindestens einen zweiten Einsatzgebiet(44);
- es wird ein unterschiedlicher Bericht erstellt abhängig davon, ob die Flächenbearbeitungsvorrichtung (12) innerhalb oder außerhalb eines Überwachungsgebietes (40) angeordnet ist, das das erste Einsatzgebiet (42) und das mindestens eine zweite Einsatzgebiet (44) umfasst;
- an das erste Benutzerprofil (36) wird ein Bericht übermittelt, wenn eine weitere Flächenbearbeitungsvorrichtung (12), die einem dritten Einsatzgebiet (46) zugewiesen ist, das sich räumlich vom ersten Einsatzgebiet (42) und vom mindestens einen zweiten Einsatzgebiet (44) unterscheidet, im ersten Einsatzgebiet (42) angeordnet ist.

7. Verfahren nach Anspruch 5 oder 6, **dadurch gekennzeichnet, dass** ein zweites Benutzerprofil (38) hinterlegt ist, an das der mindestens eine Bericht übermittelt wird, wenn die Flächenbearbeitungsvorrichtung (12) außerhalb eines Überwachungsgebietes (40) angeordnet ist, das das erste Einsatzgebiet (42) und das mindestens eine zweite Einsatzgebiet (44) umfasst.

8. Verfahren nach Anspruch 7, **dadurch gekennzeichnet, dass** an das zweite Benutzerprofil (38) kein Bericht übermittelt wird, wenn die Flächenbearbeitungsvorrichtung (12) innerhalb des Überwachungsgebietes (40) angeordnet ist.

9. Verfahren nach einem der voranstehenden Ansprüche, **dadurch gekennzeichnet, dass** das Verfahren mit einer Flächenbearbeitungsvorrichtung (12) in Gestalt einer Flächenreinigungsvorrichtung verwendet wird und/oder dass als Flächenbearbeitungsvorrichtung (12) eine selbstfahrende und selbstlenkende Flächenbearbeitungsvorrichtung verwendet wird.

10. Überwachungssystem zur Durchführung des Verfahrens nach einem der voranstehenden Ansprüche, umfassend eine Flächenbearbeitungsvorrichtung (12) und eine Zuweisungseinheit (48), über die der Flächenbearbeitungsvorrichtung (12) ein räumlich begrenztes Einsatzgebiet (42, 44, 46) zugewiesen ist, wobei mittels eines Positionssensors (16) die Position der Flächenbearbeitungsvorrichtung (12) ermittelt wird und festgestellt wird, ob die Flächenbearbeitungsvorrichtung (12) innerhalb oder außerhalb des Einsatzgebietes (42, 44, 46) angeordnet ist, wobei die Flächenbearbeitungsvorrichtung (12) einem ersten Einsatzgebiet (42) zugewiesen ist und mindestens einem zweiten Einsatzgebiet (44), das vom ersten Einsatzgebiet (42) räumlich getrennt ist, wobei festgestellt wird, ob die Flächenbearbeitungsvorrichtung (12) außerhalb des ersten Einsatzgebietes (42), aber innerhalb des mindestens einen zweiten Einsatzgebietes (44) angeordnet ist, **dadurch gekennzeichnet, dass** das Überwachungssystem (10) eine Berichtseinheit (52) umfasst, an die Positionsdaten übermittelt werden und von der mindestens ein Bericht an mindestens eine Bedienperson übermittelbar ist, wenn die Flächenbearbeitungsvorrichtung (12) nicht im ersten Einsatzgebiet (42) angeordnet ist, und dass der mindestens eine Bericht abhängig davon, wo die Flächenbearbeitungsvorrichtung (12) außerhalb des ersten Einsatzgebietes (42) angeordnet ist, sich zumindest hinsichtlich der mindestens einen Bedienperson unterscheidet, an die der mindestens eine Bericht gerichtet ist, insbesondere in Bezug auf mindestens ein in einer Speichereinheit (34) des Überwachungssystems (10) hinterlegtes Benutzerprofil (36, 38) der mindestens einen Bedienperson.

11. Überwachungssystem nach Anspruch 10, **dadurch gekennzeichnet, dass** die Flächenbearbeitungsvorrichtung (12) den Positionssensor (16) umfasst.

12. Überwachungssystem nach Anspruch 10 oder 11, **dadurch gekennzeichnet, dass** die Flächenbearbeitungsvorrichtung (12) ferner einem Überwachungsgebiet (40) zugewiesen ist, das das erste Einsatzgebiet (42) und das mindestens eine zweite Einsatzgebiet (44) umfasst, und dass feststellbar ist, ob die Flächenbearbeitungsvorrichtung (12) außerhalb des ersten Einsatzgebietes (42) und des mindestens einen zweiten Einsatzgebietes (44), aber innerhalb des Überwachungsgebietes (40) angeordnet ist oder ob die Flächenbearbeitungsvorrichtung (12) außerhalb des Überwachungsgebietes (40) angeordnet ist.

13. Überwachungssystem nach einem der Ansprüche 10 bis 12 **dadurch gekennzeichnet, dass** die Zuweisungseinheit (48) eine Eingabeschnittstelle (26) aufweist, die vorzugsweise ein Internetportal bereitstellt, umfasst oder als solches ausgebildet ist, wobei die Eingabeschnittstelle (26) vorzugsweise so ausgebildet ist, dass auf sie mit einem externen, handhaltbaren Gerät (28) mit darauf hinterlegtem Zuweisungsanwendungsprogramm auf die Zuweisungseinheit (48) zugreifbar ist zur Zuweisung eines Einsatz- oder Überwachungsgebietes (40, 42, 44, 46) an die Flächenbearbeitungsvorrichtung (12).

14. Überwachungssystem nach einem der Ansprüche 10 bis 13, **dadurch gekennzeichnet, dass** die Berichtseinheit (52) eine Ausgabeschnittstelle (26) aufweist, welche vorzugsweise ein Internetportal bereitstellt, umfasst oder als solches ausgebildet ist und/oder welche vorzugsweise so ausgebildet ist, dass mit einem auf einem externen, handhaltbaren Gerät (28) mit darauf hinterlegtem Berichtsanwendungsprogramm auf die Berichtseinheit (52) zum Aufrufen und/oder Darstellen des mindestens einen Berichtes zugegriffen werden kann.

15. Überwachungssystem nach einem der Ansprüche 10 bis 14, **dadurch gekennzeichnet, dass** in der Speichereinheit (34) ein erstes Benutzerprofil (36) hinterlegt ist, an das der mindestens eine Bericht übermittelt wird, wenn die Flächenbearbeitungsvorrichtung (12) außerhalb des ersten Einsatzgebietes (42) angeordnet ist.

16. Überwachungssystem nach Anspruch 15, **dadurch gekennzeichnet, dass** zumindest eines der Folgenden gilt:
- es wird ein unterschiedlicher Bericht erstellt abhängig davon, ob die Flächenbearbeitungsvorrichtung (12) im mindestens einen zweiten Einsatzgebiet (44) angeordnet ist oder weder im ersten Einsatzgebiet (42) noch im mindestens einen zweiten Einsatzgebiet (44);
- es wird ein unterschiedlicher Bericht erstellt abhängig davon, ob die Flächenbearbeitungsvorrichtung (12) innerhalb oder außerhalb eines Überwachungsgebietes (40) angeordnet ist, das das erste Einsatzgebiet (42) und das mindestens eine zweite Einsatzgebiet (44) umfasst;
- es wird an das erste Benutzerprofil (36) ein Bericht übermittelt, wenn eine weitere Flächenbearbeitungsvorrichtung (12), die einem dritten Einsatzgebiet (46) zugewiesen ist, das sich räumlich vom ersten Einsatzgebiet (42) und vom mindestens einen zweiten Einsatzgebiet (44) unterscheidet, im ersten Einsatzgebiet (42) angeordnet ist.

17. Überwachungssystem nach Anspruch 15 oder 16, **dadurch gekennzeichnet, dass** in der Speichereinheit (34) ein zweites Benutzerprofil (38) hinterlegt ist, an das der mindestens eine Bericht übermittelt wird, wenn die Flächenbearbeitungsvorrichtung (12) außerhalb eines Überwachungsgebietes (40) angeordnet ist, das das erste Einsatzgebiet (42) und das mindestens eine zweite Einsatzgebiet (44) umfasst.

18. Überwachungssystem nach Anspruch 17, **dadurch gekennzeichnet, dass** an das zweite Benutzerprofil (38) kein Bericht übermittelt wird, wenn die Flächenbearbeitungsvorrichtung (12) innerhalb des Überwachungsgebietes (40) angeordnet ist.

19. Überwachungssystem nach einem der Ansprüche 10 bis 18, **dadurch gekennzeichnet, dass** die Flächenbearbeitungsvorrichtung (12) eine Flächenreinigungsvorrichtung ist, insbesondere eine Bodenreinigungsvorrichtung und/oder dass die Flächenbearbeitungsvorrichtung (12) eine selbstfahrende und selbstlenkende Flächenbearbeitungsvorrichtung ist.

## Claims

1. A method for monitoring an operation location of a surface processing apparatus, wherein a surface processing apparatus (12) is allocated to a spatially delimited operation area (42, 44, 46) by way of an allocating unit (48), and wherein the position of the surface processing apparatus (12) is established, and it is determined whether the surface processing apparatus (12) is disposed inside or outside the operation area (42, 44, 46), wherein the surface processing apparatus (12) is allocated to a first operation area (42) and at least one second operation area (44) that is spatially separated from the first operation area (42), wherein it is determined whether the surface processing apparatus (12) is disposed outside the first operation area (42) but inside the at least one second operation area (44), **characterized in that** position data of the surface processing apparatus (12) are sent to a report unit (52) and at least one report is sent from the report unit (52) to at least one member of the operating personnel if the surface processing apparatus (12) is not disposed in the first operation area (42), and **in that** the at least one report differs, in dependence on where outside the first operation area (42) the surface processing apparatus (12) is disposed, at least in respect of the member of the operating personnel to whom the at least one report is directed, in particular as regards at least one user profile (36, 38) of the member of the operating personnel.

2. The method in accordance with claim 1, **characterized in that** the surface processing apparatus (12) is further allocated to a monitoring area (40) that comprises the first operation area (42) and the at least one second operation area (44), and **in that** it is determinable whether the surface processing apparatus (12) is disposed outside the first operation area (42) and the at least one second operation area (44) but inside the monitoring area (40), or whether the surface processing apparatus (12) is disposed outside the monitoring area (40).

3. The method in accordance with claim 1 or 2, **characterized in that** the allocating unit has an input interface (26) that preferably provides, comprises or takes the form of an internet portal, wherein by way of the input interface (26), the allocating unit (48) may preferably be accessed using an external, portable device (28) having an allocation application program stored thereon, for the allocation of an operation or monitoring area (40, 42, 44, 46) to the surface processing apparatus (12).

4. The method in accordance with one of the preceding claims, **characterized in that** the report unit (52) has an output interface (26) that preferably provides, comprises or takes the form of an internet portal and/or by way of which, the report unit is preferably accessed using an external, portable device (28) having a report application program stored thereon, for calling up and/or displaying the at least one report.

5. The method in accordance with one of the preceding claims, **characterized in that** there is stored a first user profile (36), to which the at least one report is sent if the surface processing apparatus (12) is disposed outside the first operation area (42).

6. The method in accordance with claim 5, **characterized in that** at least one of the following is carried out:
- a different report is generated in dependence on whether the surface processing apparatus (12) is disposed in the at least one second operation area (44) or in neither the first operation area (42) nor the at least one second operation area (44);
- a different report is generated in dependence on whether the surface processing apparatus (12) is disposed inside or outside a monitoring area (40) that comprises the first operation area (42) and the at least one second operation area (44);
- a report is sent to the first user profile (36) if a further surface processing apparatus (12) that is allocated to a third operation area (46), which differs spatially from the first operation area (42) and from the at least one second operation area (44), is disposed in the first operation area (42).

7. The method in accordance with one of claims 5 or 6, **characterized in that** there is stored a second user profile (38), to which the at least one report is sent if the surface processing apparatus (12) is disposed outside a monitoring area (40) that comprises the first operation area (42) and the at least one second operation area (44).

8. The method in accordance with claim 7, **characterized in that** no report is sent to the second user profile (38) if the surface processing apparatus (12) is disposed inside the monitoring area (40).

9. The method in accordance with one of the preceding claims, **characterized in that** the method is used with a surface processing apparatus (12) in the form of a surface cleaning device and/or **in that** as the surface processing apparatus (12) there is used a self-propelling and self-steering surface processing apparatus.

10. A monitoring system for performing the method in accordance with one of the preceding claims, comprising a surface processing apparatus (12) and an allocating unit (48) which is configured to allocate a spatially delimited operation area (42, 44, 46) to the surface processing apparatus (12), wherein the position of the surface processing apparatus (12) is established by means of a position sensor (16), and it is determined whether the surface processing apparatus (12) is disposed inside or outside the operation area (42, 44, 46), wherein the surface processing apparatus (12) is allocated to a first operation area (42) and to at least one second operation area (44) that is spatially separated from the first operation area (42), wherein it is determined whether the surface processing apparatus (12) is disposed outside the first operation area (42) but inside the at least one second operation area (44), **characterized in that** that the monitoring system (10) comprises a report unit (52) to which position data are sent and from which at least one report is sendable to at least one member of the operating personnel if the surface processing apparatus (12) is not disposed in the first operation area (42), and **in that** the at least one report differs, in dependence on where outside the first operation area (42) the surface processing apparatus (12) is disposed, at least in respect of the member of the operating personnel to whom the at least one report is directed, in particular as regards at least one user profile (36, 38), which is stored in a memory unit (34) of the monitoring system (10), of the member of the operating personnel.

11. The monitoring system in accordance with claim 10, **characterized in that** the surface processing apparatus (12) comprises the position sensor (16).

12. The monitoring system in accordance with claim 10 or 11, **characterized in that** the surface processing apparatus (12) is further allocated to a monitoring area (40) that comprises the first operation area (42) and the at least one second operation area (44), and **in that** it is determinable whether the surface processing apparatus (12) is disposed outside the first operation area (42) and the at least one second operation area (44) but inside the monitoring area (40), or whether the surface processing apparatus (12) is disposed outside the monitoring area (40).

13. The monitoring system in accordance with one of claims 10 to 12, **characterized in that** the allocating unit (48) has an input interface (26) that preferably provides, comprises or takes the form of an internet portal, wherein the input interface (26) preferably takes a form such that thereon the allocating unit (48) is accessible using an external, portable device (28) having an allocation application program stored thereon, for the allocation of an operation or monitoring area (40, 42, 44, 46) to the surface processing apparatus (12).

14. The monitoring system in accordance with one of claims 10 to 13, **characterized in that** the report unit (52) has an output interface (26) that preferably provides, comprises or takes the form of an internet portal and/or that is preferably configured such that the report unit (52) is accessible, using an external, portable device (28) having a report application program stored thereon, for calling up and/or displaying the at least one report.

15. The monitoring system in accordance with one of claims 10 to 14, **characterized in that** there is stored in the memory unit (34) a first user profile (36) to which the at least one report is sent if the surface processing apparatus (12) is disposed outside the first operation area (42).

16. The monitoring system in accordance with claim 15, **characterized in that** at least one of the following applies:
- a different report is generated in dependence on whether the surface processing apparatus (12) is disposed in the at least one second operation area (44) or is in neither the first operation area (42) nor the at least one second operation area (44);
- a different report is generated in dependence on whether the surface processing apparatus (12) is disposed inside or outside a monitoring area (40) that comprises the first operation area (42) and the at least one second operation area (44);
- a report is sent to the first user profile (36) if there is disposed in the first operation area (42) a further surface processing apparatus (12) that is allocated to a third operation area (46), which differs spatially from the first operation area (42) and from the at least one second operation area (44).

17. The monitoring system in accordance with claim 15 or 16, **characterized in that** there is stored in the memory unit (34) a second user profile (38), to which the at least one report is sent if the surface processing apparatus (12) is disposed outside a monitoring area (40) that comprises the first operation area (42) and the at least one second operation area (44).

18. The monitoring system in accordance with claim 17, **characterized in that** no report is sent to the second user profile (38) if the surface processing apparatus (12) is disposed inside the monitoring area (40).

19. The monitoring system in accordance with one of claims 10 to 18, **characterized in that** the surface processing apparatus (12) is a surface cleaning device, in particular a floor cleaning device and/or **in that** the surface processing apparatus (12) is a self-propelling and self-steering surface processing apparatus.

## Revendications

1. Procédé de surveillance d'un lieu d'utilisation d'un dispositif de traitement de surface, dans lequel un dispositif de traitement de surface (12) est affecté à une zone d'utilisation (42, 44, 46) délimitée dans l'espace par l'intermédiaire d'une unité d'affectation (48) et dans lequel la position du dispositif de traitement de surface (12) est déterminée et il est établi si le dispositif de traitement de surface (12) est situé à l'intérieur ou à l'extérieur de la zone d'utilisation (42, 44, 46), dans lequel le dispositif de traitement de surface (12) est affecté à une première zone d'utilisation (42) et à au moins une deuxième zone d'utilisation (44), qui est séparée dans l'espace de la première zone d'utilisation (42), dans lequel il est établi si le dispositif de traitement de surface (12) est situé à l'extérieur de la première zone d'utilisation (42), mais à l'intérieur de l'au moins une deuxième zone d'utilisation (44),
**caractérisé en ce que** des données de position du dispositif de traitement de surface (12) sont transmises à une unité de rapport (52) et au moins un rapport est transmis par l'unité de rapport (52) à au moins un opérateur, lorsque le dispositif de traitement de surface (12) n'est pas situé dans la première zone d'utilisation (42), et **en ce que** l'au moins un rapport, selon l'endroit où le dispositif de traitement de surface (12) est situé à l'extérieur de la première zone d'utilisation (42), se différencie au moins pour ce qui est de l'au moins un opérateur auquel l'au moins un rapport est adressé, en particulier en ce qui concerne au moins un profil utilisateur (36, 38) de l'au moins un opérateur.

2. Procédé selon la revendication 1, **caractérisé en ce que** le dispositif de traitement de surface (12) est affecté en outre à une zone de surveillance (40), qui comprend la première zone d'utilisation (42) et l'au moins une deuxième zone d'utilisation (44) et **en ce qu'**il est possible d'établir si le dispositif de traitement de surface (12) est situé à l'extérieur de la première zone d'utilisation (42) et de l'au moins une deuxième zone d'utilisation (44), mais à l'intérieur de la zone de surveillance (40) ou si le dispositif de traitement de surface (12) est situé à l'extérieur de la zone de surveillance (40).

3. Procédé selon la revendication 1 ou 2, **caractérisé en ce que** l'unité d'affectation présente une interface d'entrée (26), qui de préférence fournit, comprend un portail Internet ou est réalisée en tant que tel, dans lequel il est possible d'accéder à l'unité d'affectation (48) par l'intermédiaire de l'interface d'entrée (26) de préférence au moyen d'un appareil portatif externe (28) dans lequel un programme d'application d'affectation est mis en mémoire, pour l'affectation d'une zone d'utilisation ou de surveillance (40, 42, 44, 46) au dispositif de traitement de surface (12).

4. Procédé selon l'une quelconque des revendications précédentes, **caractérisé en ce que** l'unité de rapport (52) présente une interface de sortie (26), laquelle de préférence fournit, comprend un portail Internet ou est réalisée en tant que tel et/ou par l'intermédiaire de laquelle il est possible d'accéder à l'unité de rapport de préférence au moyen d'un appareil portatif externe (28) dans lequel un programme d'application de rapport est mis en mémoire, pour la consultation et/ou la visualisation de l'au moins un rapport.

5. Procédé selon l'une quelconque des revendications précédentes, **caractérisé en ce qu'**un premier profil utilisateur (36), auquel l'au moins un rapport est transmis lorsque le dispositif de traitement de surface (12) est situé à l'extérieur de la première zone d'utilisation (42), est mis en mémoire.

6. Procédé selon la revendication 5, **caractérisé en ce qu'**au moins un de ce qui suit est réalisé :
- un rapport différent est élaboré selon que le dispositif de traitement de surface (12) est situé dans au moins une deuxième zone d'utilisation (44) ou n'est situé ni dans la première zone d'utilisation (42) ni dans l'au moins une deuxième zone d'utilisation (44) ;
- un rapport différent est établi selon que le dispositif de traitement de surface (12) est situé à l'intérieur ou à l'extérieur d'une zone de surveillance (40), qui comprend la première zone d'utilisation (42) et l'au moins une deuxième zone d'utilisation (44) ;
- un rapport est transmis au premier profil utilisateur (36) lorsqu'un autre dispositif de traitement de surface (12), qui est affecté à une troisième zone d'utilisation (46) qui se différencie dans l'espace de la première zone d'utilisation (42) et de l'au moins une deuxième zone d'utilisation (44), est situé dans la première zone d'utilisation (42).

7. Procédé selon la revendication 5 ou 6, **caractérisé en ce qu'**un deuxième profil utilisateur (38), auquel l'au moins un rapport est transmis lorsque le dispositif de traitement de surface (12) est situé à l'extérieur d'une zone de surveillance (40), qui comprend la première zone d'utilisation (42) et l'au moins une deuxième zone d'utilisation (44), est mis en mémoire.

8. Procédé selon la revendication 7, **caractérisé en ce qu'**aucun rapport n'est transmis au deuxième profil utilisateur (38) lorsque le dispositif de traitement de surface (12) est situé à l'intérieur de la zone de surveillance (40).

9. Procédé selon l'une quelconque des revendications précédentes, **caractérisé en ce que** le procédé est utilisé avec un dispositif de traitement de surface (12) prenant la forme d'un dispositif de nettoyage de surface et/ou **en ce qu'**un dispositif de traitement de surface automoteur et autodirecteur est utilisé comme dispositif de traitement de surface (12).

10. Système de surveillance pour la mise en oeuvre du procédé selon l'une quelconque des revendications précédentes, comprenant un dispositif de traitement de surface (12) et une unité d'affectation (48) permettant d'affecter une zone d'utilisation (42, 44, 46) délimitée dans l'espace au dispositif de traitement de surface (12), dans lequel la position du dispositif de traitement de surface (12) est déterminée au moyen d'un capteur de position (16) et il est établi si le dispositif de traitement de surface (12) est situé à l'intérieur ou à l'extérieur de la zone d'utilisation (42, 44, 46), dans lequel le dispositif de traitement de surface (12) est affecté à une première zone d'utilisation (42) et à au moins une deuxième zone d'utilisation (44), qui est séparée dans l'espace de la première zone d'utilisation (42), dans lequel il est établi si le dispositif de traitement de surface (12) est situé à l'extérieur de la première zone d'utilisation (42) mais à l'intérieur de l'au moins une deuxième zone d'utilisation (44),
**caractérisé en ce que** le système de surveillance (10) comprend une unité de rapport (52) à laquelle des données de position sont transmises et par laquelle au moins un rapport peut être transmis à au moins un opérateur lorsque le dispositif de traitement de surface (12) n'est pas situé dans la première zone d'utilisation (42), et **en ce que** l'au moins un rapport, selon l'endroit où le dispositif de traitement de surface (12) est situé à l'extérieur de la première zone d'utilisation (42), se différencie au moins pour ce qui est de l'au moins un opérateur auquel l'au moins un rapport est adressé, en particulier en ce qui concerne au moins un profil utilisateur (36, 38) de l'au moins un opérateur mis en mémoire dans une unité mémoire (34) du système de surveillance (10).

11. Système de surveillance selon la revendication 10, **caractérisé en ce que** le dispositif de traitement de surface (12) comprend le capteur de position (16).

12. Système de surveillance selon la revendication 10 ou 11, **caractérisé en ce que** le dispositif de traitement de surface (12) est affecté en outre à une zone de surveillance (40), qui comprend la première zone d'utilisation (42) et l'au moins une deuxième zone d'utilisation (44), et **en ce qu'**il est possible d'établir si le dispositif de traitement de surface (12) est situé à l'extérieur de la première zone d'utilisation (42) et de l'au moins une deuxième zone d'utilisation (44) mais à l'intérieur de la zone de surveillance (40), ou si le dispositif de traitement de surface (12) est situé à l'extérieur de la zone de surveillance (40).

13. Système de surveillance selon l'une quelconque des revendications 10 à 12, **caractérisé en ce que** l'unité d'affectation (48) présente une interface d'entrée (26), qui de préférence fournit, comprend un portail Internet ou est réalisée en tant que tel, dans lequel l'interface d'entrée (26) est réalisée de préférence de telle sorte qu'elle permet d'accéder à l'unité d'affectation (48) au moyen d'un appareil portatif externe (28) dans lequel est mis en mémoire un programme d'application d'affectation, pour l'affectation d'une zone d'utilisation ou de surveillance (40, 42, 44, 46) au dispositif de traitement de surface (12).

14. Système de surveillance selon l'une quelconque des revendications 10 à 13, **caractérisé en ce que** l'unité de rapport (52) présente une interface de sortie (26), laquelle de préférence fournit, comprend un portail Internet ou est réalisée en tant que tel et/ou laquelle est réalisée de préférence de telle sorte qu'il est possible d'avoir accès à l'unité de rapport (52) au moyen d'un appareil portatif externe (28) dans lequel un programme d'application de rapport est mis en mémoire, pour la consultation et/ou la visualisation de l'au moins un rapport.

15. Système de surveillance selon l'une quelconque des revendications 10 à 14, **caractérisé en ce qu'**un premier profil utilisateur (36), auquel est transmis l'au moins un rapport lorsque le dispositif de traitement de surface (12) est situé à l'extérieur de la première zone d'utilisation (42), est mis en mémoire dans l'unité mémoire (34).

16. Système de surveillance selon la revendication 15, **caractérisé en ce qu'**au moins un de ce qui suit s'applique :
- un rapport différent est élaboré selon que le dispositif de traitement de surface (12) est situé dans au moins une deuxième zone d'utilisation (44) ou n'est situé ni dans la première zone d'utilisation (42) ni dans l'au moins une deuxième zone d'utilisation (44) ;
- un rapport différent est établi selon que le dispositif de traitement de surface (12) est situé à l'intérieur ou à l'extérieur d'une zone de surveillance (40), qui comprend la première zone d'utilisation (42) et l'au moins une deuxième zone d'utilisation (44) ;
- un rapport est transmis au premier profil utilisateur (36) lorsqu'un autre dispositif de traitement de surface (12), qui est affecté à une troisième zone d'utilisation (46) qui se différencie dans l'espace de la première zone d'utilisation (42) et de l'au moins une deuxième zone d'utilisation (44), est situé dans la première zone d'utilisation (42).

17. Système de surveillance selon la revendication 15 ou 16, **caractérisé en ce qu'**un deuxième profil utilisateur (38), auquel l'au moins un rapport est transmis lorsque le dispositif de traitement de surface (12) est situé à l'extérieur d'une zone de surveillance (40) qui comprend la première zone d'utilisation (42) et l'au moins une deuxième zone d'utilisation (44), est mis en mémoire dans l'unité mémoire (34).

18. Système de surveillance selon la revendication 17, **caractérisé en ce qu'**aucun rapport n'est transmis au deuxième profil utilisateur (38) lorsque le dispositif de traitement de surface (12) est situé à l'intérieur de la zone de surveillance (40).

19. Système de surveillance selon l'une quelconque des revendications 10 à 18, **caractérisé en ce que** le dispositif de traitement de surface (12) est un dispositif de nettoyage de surface, en particulier un dispositif de nettoyage des sols et/ou **en ce que** le dispositif de traitement de surface (12) est un dispositif de traitement de surface automoteur et autodirecteur.
